# EUROPEAN PATENT APPLICATION

(11) **EP 2 216 673 A1**
(43) Date of publication of application: **11.08.2010**
(21) Application number: 10152939.4
(22) Date of filing: 08.02.2010
(51) Int. Cl.: G02C 5/22, G02C 11/02

(54) **Hinge for spectacles and decorative element for a hinge for spectacles**

(30) Priority: 09.02.2009 IT UD20090028
(71) Applicant: Visottica Industrie S.p.A. con unico socio, 31058 Susegana (TV) (IT)
(72) Inventor: Montalban, Rinaldo, 30100, Venezia (IT)
(74) Representative: Petraz, Gilberto Luigi

(57) **Abstract**

Hinge for spectacles (10) comprising at least two articulation elements (13, 15) pivoted to each other by means of a pin (14) and mounted on relative components (11, 12) of a frame of the spectacles, and a decorative element (17) provided with a decorative portion (17c) disposed in view, and associated with one of the two articulation elements (13, 15). Each articulation element (13, 15) comprises an articulation portion (19) conformed so as to allow the functional housing of the pin (14) and to define the reciprocal articulation of the two articulation elements (13, 15). The decorative element (17) comprises an attachment portion (17b) conformed so as to cooperate with a relative articulation portion (19) of one and/or the other of the two articulation elements (13, 15), and to house inside it a coordinated part of the pin (14), so that the pin (14) defines both the pivoting between the two articulation elements (13, 15), and also the structural attachment of the decorative element (17) to the articulation element (13, 15).

## Description

### FIELD OF THE INVENTION

The present invention concerns a hinge for spectacles and a decorative element for the hinge, whether the latter is the simple type or elastic type, able to connect an arm to a lug or front piece of a frame for spectacles.

### BACKGROUND OF THE INVENTION

Hinges are known, both of the elastic type and the simple type, which articulate with respect to each other an arm and a lug or front piece of a frame, allowing to keep an adequate pressure on the user's temples in order to improve wearability.

Traditional hinges generally consist of two articulation elements pivoted to each other by means of a screw-type pin, and mounted, respectively, a first on the arm and a second on the lug or front piece of the frame for spectacles.

Each articulation element is preferably made of metal material, or plastic material, and has relative articulation eyelets which functionally allow the positioning of the screw-type pin in order to articulate the hinge.

In the field of production of spectacles and their components, there is an ever-growing need to give the hinges, and more generally the frame, particular aesthetic forms, and to affix upon them ornaments, trademarks, logos or other marks that identify the producer or a particular product line.

Moreover, in order to identify the originality of the product with greater certainty, it is more and more frequent to make or affix ornaments, trademarks, logos or other distinctive marks directly on the parts of the frame, such as for example on the hinges.

In this way, given the extremely limited sizes of the components, the possible reproduction of such distinctive marks is difficult to achieve for a counterfeiter.

Hinges for spectacles are known in which the various components have external surfaces, or shapings, structured to identify said distinctive marks.

These conformations are normally achieved by mechanical working through the removal of material, by minting, or directly by molding.

Known solutions are very expensive, however, both if mechanical working is used, especially because of the working times and the waste of material, and also in the case of direct molding, since in order to obtain a satisfactory quality expensive molding techniques have to be used, for example of the type known by the acronyms PIM and MIM.

Furthermore, for every type and size of shaping, known solutions require a specific type of tool, and also programming of the machine tools or molding equipment.

Hinges for spectacles are also known that have portions on which the distinctive marks are made by laser etching. However this known solution also entails very high costs, and specific programming of the equipment.

Moreover, with hinges obtained according to traditional technologies, if it is the articulation elements themselves that define with their form the desired distinctive mark, specific design and working steps must be provided on each occasion, with high production costs and considerable stock on hand.

Hinges for spectacles are also known from US Patent US-B-6,863,394, in which an ornamental attachment has a hinge screw portion and a decorative ornament extending laterally from the spectacles. In this known solution the hinge screw portion is selectively inserted into the hinge junction of the spectacles in order both to articulate the arm and the lug or front piece of the frame, and to secure the ornamental attachment to the spectacles.

Hinges for spectacles are also known from European Patent Application EP-A-0 456 381, in which a hanging ornament for spectacles comprises an ornamental element attachable and removable from the pair of spectacles by way of an attachment means comprising an anchor member for attachment to the spectacles and a fastener for removably connecting the ornamental element to the anchor member.

US-A-2,627,782 describes a decorative attachment for the wire frame pieces of the spectacles.

Purpose of the present invention is to achieve a hinge for spectacles and a decorative element on which ornaments, trademarks, logos or other distinctive marks are made, which are simple and economical to make, which guarantee an excellent final aesthetic result, and which do not entail high production costs and stock on hand.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

A hinge for spectacles according to the present invention comprises at least two articulation elements pivoted to each other by means of a pin and mounted respectively on an arm and on a lug, or front piece, of a frame of said spectacles.

Each articulation element comprises at least an articulation portion conformed to allow the functional housing of the pin and to define the reciprocal articulation of the two articulation elements and hence of the hinge.

In accordance with the above purpose, the hinge comprises at least a decorative element, independent, associated with at least one of the articulation elements.

According to the invention, the decorative element comprises at least an attachment portion conformed to cooperate with at least a relative articulation portion of one and/or the other articulation element, and able to house inside it at least a coordinated part of the pin, so that the latter defines not only the pivoting of the two articulation elements but also the structural attachment of the decorative element to the relative articulation element.

With the present invention it is therefore the pin itself that actuates the articulation between the parts, to define the attachment of the decorative element to the articulation element or elements, so that no welding or gluing operations are necessary, nor snap-in attachments or other, which can entail increases in the times and costs of production.

Therefore, with the present invention, the decorative element can be attached to the relative articulation element directly during the assembly steps of the elastic hinge, reducing the overall times and costs of production.

According to a variant, the decorative element also comprises a positioning seating on the relative articulation element, which seating has a substantially standardized conformation.

The standardized conformation of the positioning seating consequently allows to make articulation elements for the hinge having correspondingly standardized shapes and sizes.

The operations to make the articulation elements are therefore considerably simplified, giving benefits in terms of the times and costs of making the hinge, and also the reduction of the various stocks in hand.

In general, with the present invention, to make the articulation element does not require specific programming of the machine tools or mold equipment, in order to make the distinctive marks.

Indeed, with the present invention, it is possible to provide a standardized production of articulation elements, with the possibility of freely associating one type or another type of decorative element on each occasion, depending on the different aesthetic requirements of the producer of spectacles.

Advantageously, the decorative element is conformed externally to define one or more identifying marks of the product or the producer.

According to some variants, the decorative element at least partly has an external conformation identifying the product and/or the producer, defining on the perimeter trademarks, drawings, logos or alphanumerical marks and/or provides the conformation of seatings in which distinctive marks can be applied.

Furthermore, given the simple and standardized production, both the attachment seating and the functional opening can be made simply, without using expensive and particular mechanical technologies.

Moreover, since the decorative element is distinct from the relative articulation element, the decorative element can be made in a different material from the articulation element. In this way it is possible to have decorative elements made with any coloring or material, for example metal, plastic, wood, rhinestone, ceramic materials, minerals such as precious stones or other.

Moreover, since the decorative element is distinct from the relative articulation element, it can follow different production cycles from those that the articulation element follows, and more in general, the spectacles as a whole. In this way, it is possible to have different surface finishes, different galvanic treatments and/or colors.

### BRIEF DESCRIPTION OF THE DRAWINGS

These and other characteristics of the present invention will become apparent from the following description of some preferential forms of embodiment, given as a non-restrictive example with reference to the attached drawings wherein:

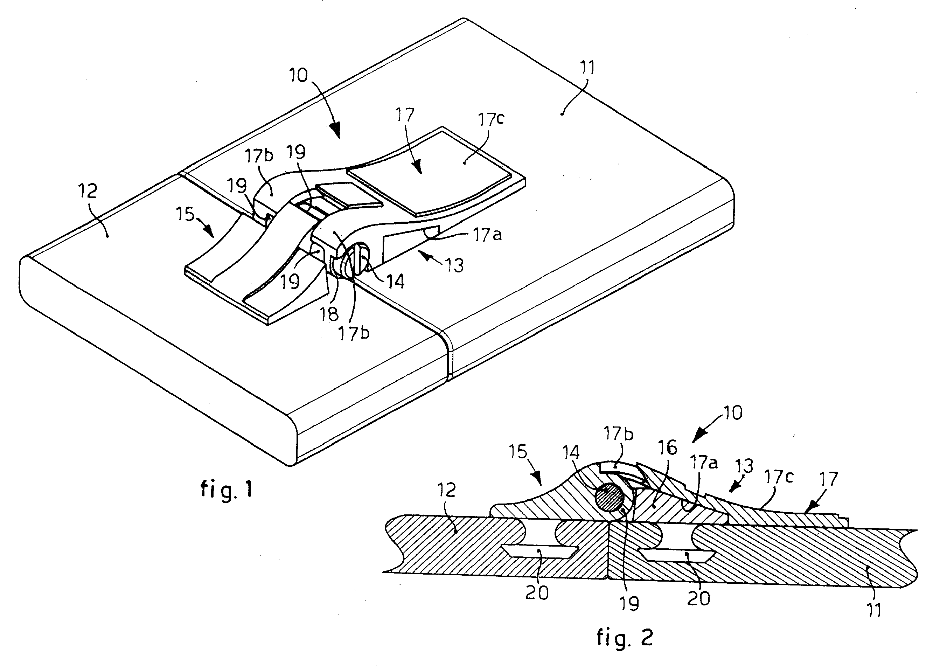

- fig. 1 is a three-dimensional view of a hinge for spectacles according to the present invention, applied to relative parts of a frame, in a first operating condition;
- fig. 2 is a lateral sectioned view of the hinge in fig. 1;

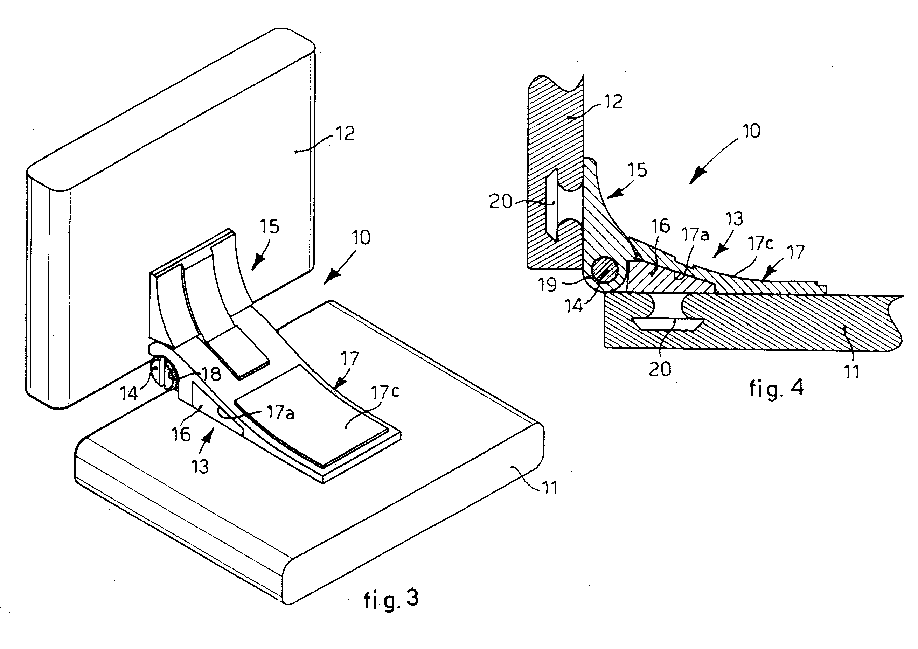

- fig. 3 is a three-dimensional view of the hinge in fig. 1, in a second operating condition;
- fig. 4 is a lateral sectioned view of the hinge in fig. 3;

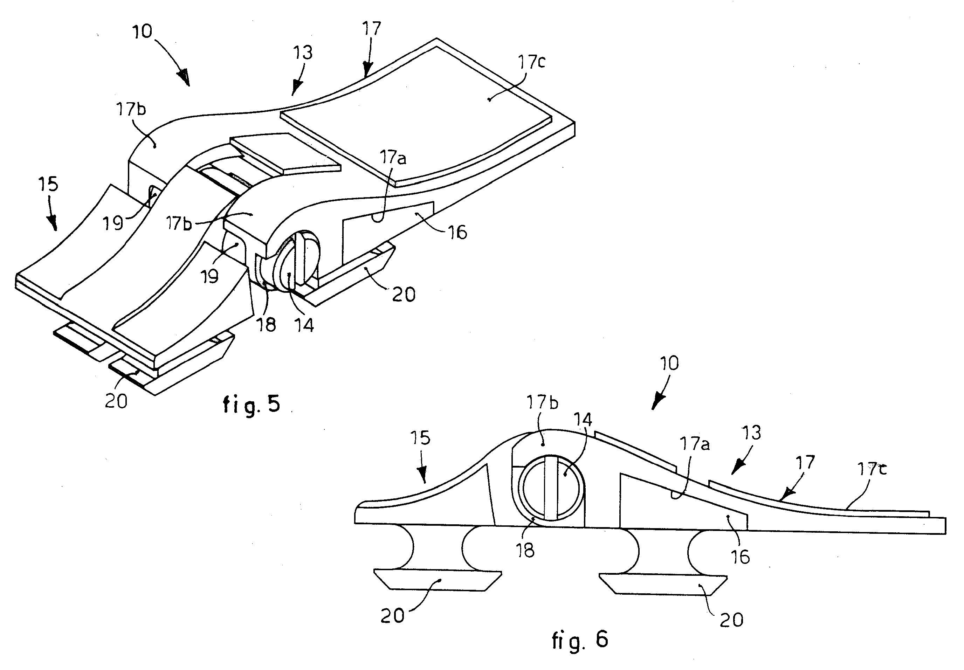

- fig. 5 is a three-dimensional view of the hinge in fig. 1;
- fig. 6 is a lateral view of the hinge in fig. 1;

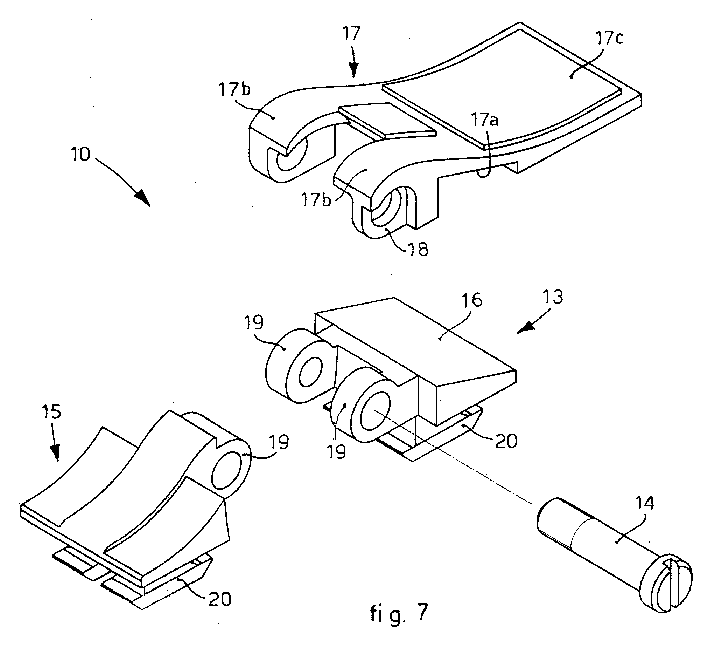

- fig. 7 is a three-dimensional exploded view of the hinge in fig. 1;

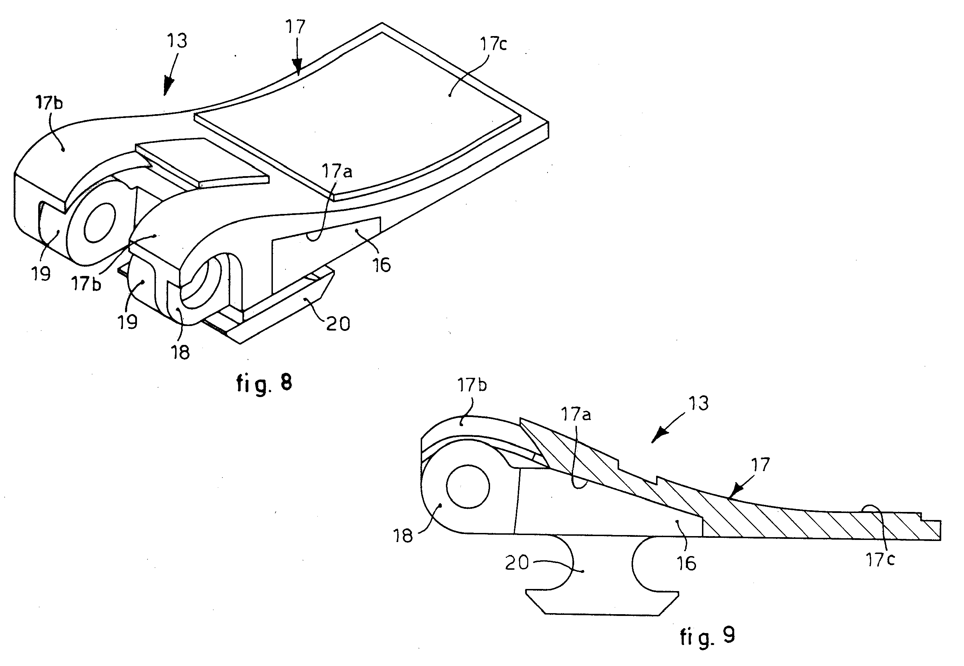

- fig. 8 is a three-dimensional view of an articulation element of the hinge in fig. 1;
- fig. 9 is a lateral sectioned view of the articulation element in fig. 8;
- fig. 10 is a three-dimensional view of a variant of an articulation element of the hinge in fig. 1;
- fig. 11 is a lateral view of the articulation element in fig. 10;
- fig. 12 is a three-dimensional view of another variant of an articulation element of the hinge in fig. 1;
- fig. 13 is a lateral view of the articulation element in fig. 12;
- fig. 14 is a three-dimensional view of another variant of an articulation element of the hinge of fig. 1;
- fig. 15 is a lateral sectioned view of the articulation element of fig. 14.

### DETAILED DESCRIPTION OF SOME PREFERENTIAL FORMS OF EMBODIMENT

With reference to the attached drawings, a hinge for spectacles 10 according to the present invention is applied to reciprocally articulate an arm 11 to a lug 12 or a front piece of a frame for spectacles.

In particular, in the embodiments shown in the attached drawings, to give a non-restrictive example, the hinge 10 according to the present invention is of the traditional type and is able to allow the reciprocal rotation of the arm 11 and the lug 12 or front piece, to define determined conditions of opening and closing.

However, it cannot be excluded that the present invention may be equally applied effectively to hinges of the elastic type too, that is, with an elastic extra travel on opening to improve the conditions of wearing the frame.

The hinge 10 traditionally comprises two articulation elements, respectively a first 13 associated with the arm 11 and a second 15 associated with the lug 12 or front piece.

Each articulation element 13, 15 comprises relative hinging elements 19, reciprocally pivoted to each other by means of a pin 14, for example a screw, and relative anchors 20 anchoring to the relative arm 11 or lug 12 of the frame.

In this case the first articulation element 13 comprises a base body 16 defining the pivoting eyelets 19.

The base body 16 is normally made of metal material, has simplified shape, substantially polyhedral with standardized sizes.

According to a variant, not shown, the base body 16 has beveled, rounded or shaped or tapered edges, to facilitate the coupling with a decorative element 17.

The first articulation element 13 comprises a decorative element 17 preferably made of plastic material, but also metal or other, and provided with a positioning seating 17a, an attachment portion 17b and a decorative portion 17c.

The positioning seating 17a, in this case, is transversely through, open toward a lower side of the decorative element 17 and has standardized shape and sizes coordinated with those of the base body 16, so as to house the latter inside it, in a correlated manner.

The attachment portion 17b, in this case double, is made toward a front side of the decorative element 17.

In this case, one of the two attachment portions 17b comprises a through attachment seating 18 made in a position such that in a mounted condition of the decorative element 17 on the base body 16, it is substantially coaxial with the holes of the hinging eyelets 19.

It cannot be excluded that both attachment portions 17b can provide a relative attachment seating 18.

In this way, the positioning of the pin 14 occurs not only through the hinging elements 19 but also through the attachment seating 18.

In particular, the attachment seating 18 is conformed with an abutment surface against which the pin 14 acts, so as to keep the decorative element 17 constrained to the base body 16 by clamping the attachment portion 17b and the relative hinging eyelet 19.

In this way, the decorative element 17 is attached to the first articulation element 13 without needing glues, welding, spot-welding, snap-in coupling or other.

The decorative portion 17c is disposed visible and in this case is made on the opposite side of the decorative element 17 with respect to the attachment seating 17a.

In particular, the decorative portion 17c is conformed to identify one or more distinctive marks of the product and/or the producer.

The distinctive marks identifiable on the decorative portion 17c can be for example logos, trademarks, writings, drawings or other, made by etching, silk screen printing, printing, or made in relief on the external surface, or defined by the external shaping of the decorative element 17.

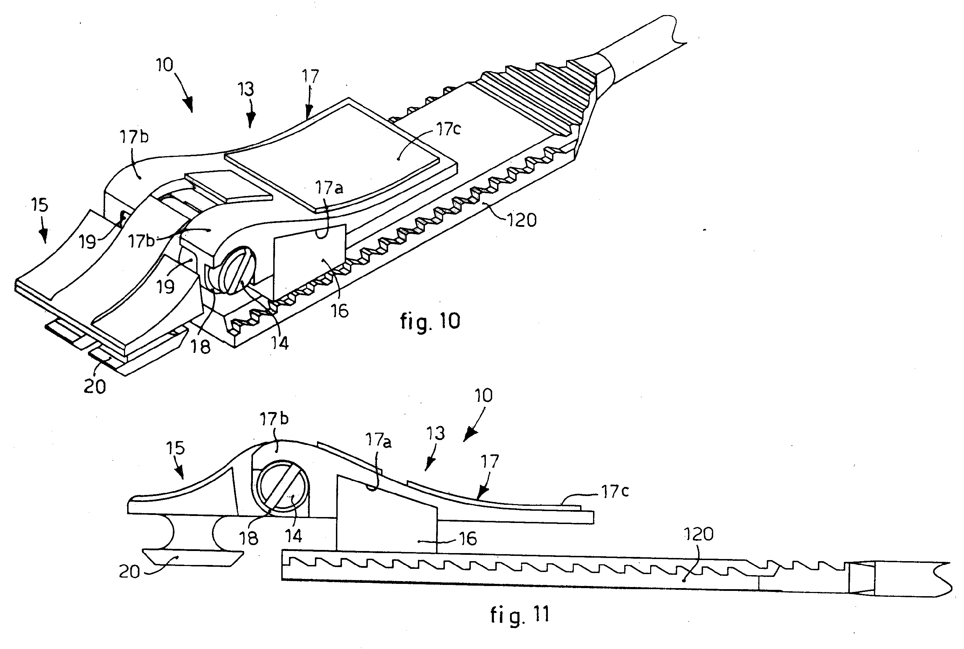

In the embodiment shown in figs. 10 and 11, the hinge for spectacles 10 according to the present invention is of the type suitable for assembly on frames made of acetate or similar materials.

Indeed, below the body 16, the first articulation element 13 comprises a metal core 120 instead of the anchors 20 found in the precious solution.

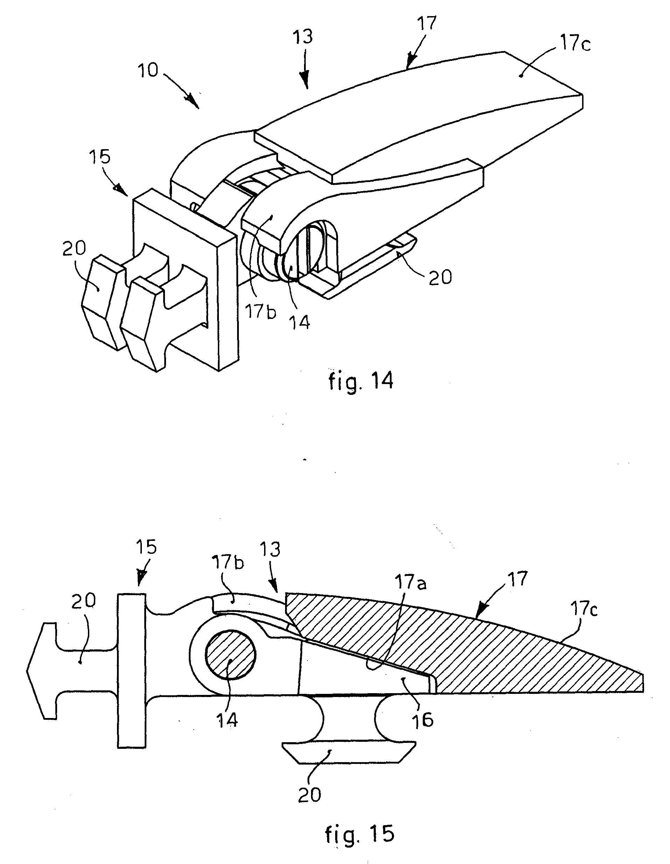

In the embodiment shown in figs. 14 and 15, the decorative element 17 comprises a blind positioning seating 17a, in which the whole base body 16 is contained.

In this case the second articulation element 15 has the anchor 20 in a front configuration.

It is clear, however, that modifications and/or additions of parts may be made to the hinge 10 as described hereinbefore, without departing from the field and scope of the present invention.

For example, it comes within the field of the present invention to provide that on the second articulation element 15 too a decorative element 17 can be attached, having the same characteristics as those described for the first articulation element 13.

According to another variant, the attachment seating 17a or 117a and the body 16, 116 of the relative articulation element 13 or 15 comprise respective surfaces conformed so as to be reciprocally joined through interference or with snap-in attachment.

According to another variant, the decorative portion 17c provides on the surface at least a seating to house a trademark, logo or other distinctive mark of the product and/or producer.

According to a variant, the decorative element 17 is made of aluminum, or an alloy thereof, and subjected to an anodizing process.

According to another variant, the decorative element 17 is made of zinc, or an alloy thereof (such as for example Zama).

According to another variant, the decorative element 17 is obtained by means of a minting or forging process.

According to another variant, the decorative element 17 is obtained by means of a molding method with the injection of metal powders, for example with known techniques like MIM, PIM, or others.

According to another variant, the decorative element 17 is obtained by means of casting processes, for example pressure die-casting.

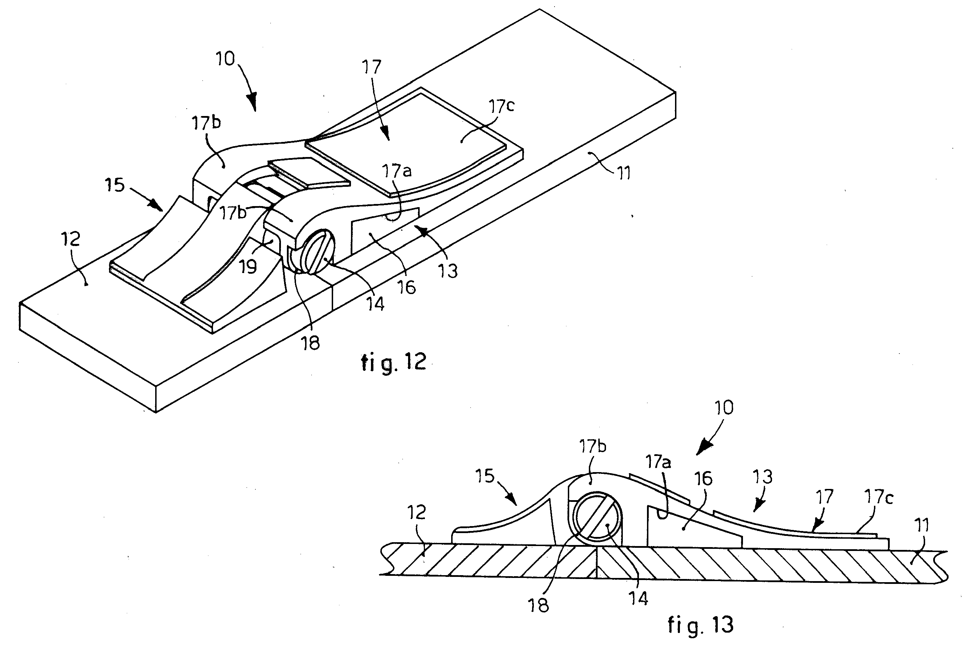

It also comes within the field of the present invention to provide, as shown in the variant in figs. 12 and 13, that the solution according to the present invention is applied to a hinge 10 with articulation elements 13 and 15 of the type that can be welded to the relative arm and lug 12.

It is also clear that, although the present invention has been described with reference to specific examples, a person of skill in the articulation shall certainly be able to achieve many other equivalent forms of hinge for spectacles and decorative element for a hinge for spectacles, having the characteristics as set forth in the claims and hence all coming within the field of protection defined thereby.

## Claims

1. Hinge for spectacles comprising at least two articulation elements (13, 15) pivoted to each other by means of a pin (14) and mounted on relative components (11, 12) of a frame of said spectacles, and at least one decorative element (17), distinct from said pin (14) and provided with a decorative portion (17c) of said articulation elements (13, 15), and able to be disposed in view, and associated with at least one of said two articulation elements (13, 15), each articulation element (13, 15) comprising at least one articulation portion (19) conformed so as to allow the functional housing of said pin (14) and to define the reciprocal articulation of said two articulation elements (13, 15), **characterized in that** said decorative element (17) comprises at least one attachment portion (17b) conformed so as to cooperate with at least one relative articulation portion (19) of one and/or the other of said two articulation elements (13, 15), and to house inside it at least one coordinated part of said pin (14), so that said pin (14) defines both the pivoting between said two articulation elements (13, 15), and also the structural attachment of said decorative element (17) to said articulation element (13, 15).

2. Hinge as in claim 1, **characterized in that** said attachment portion (17b) comprises at least one through attachment seating (18) defining at least one abutment surface against which said pin (14) acts.

3. Hinge as in claim 2, **characterized in that** said attachment seating (18) is achieved in such a position that, in a mounted condition of said decorative element (17) on the articulation element (13, 15), it is substantially coaxial with the relative articulation portion (19).

4. Hinge as in any claim hereinbefore, **characterized in that** said decorative element (17) comprises at least one positioning seating (17a) of standardized shape and dimensions, and able to house inside it at least one coordinated part of a body (16) of said articulation element (13, 15), so as to define the structural constraint of the decorative element (17) to the articulation element (13, 15).

5. Hinge as in any claim hereinbefore, **characterized in that** said positioning seating (17a) is open toward a lower side of said decorative element (17).

6. Hinge as in any claim hereinbefore, **characterized in that** said articulation element (13, 15) is made at least partly of metal material, while said decorative element (17) is made of plastic material.

7. Hinge as in any claim from 1 to 5, **characterized in that** said articulation element (13, 15) and said decorative element (17) are made of metal material.

8. Hinge as in any claim hereinbefore, **characterized in that** said decorative portion (17c) is conformed to define one or more identifying marks of the product and/or of the producer.

9. Hinge as in any claim hereinbefore, **characterized in that** said decorative element (17) comprises, at least partly, a structural shaping identifying the product and/or the producer.

10. Decorative element for a hinge for spectacles as in any claim hereinbefore.
